# DEMANDE DE BREVET EUROPEEN

(11) **EP 1 303 103 A1**
(43) Date de publication de la demande: **16.04.2003**
(21) Numéro de dépôt: 02292443.5
(22) Date de dépôt: 04.10.2002
(51) Int. Cl.: H04L 29/06, H04L 29/08, G08G 1/00, G08G 1/127, B61L 29/24

(54) **Système pour fournir via Internet des informations rélatives à un réseau de transport collectif**

(30) Priorité: 12.10.2001 FR 0113202
(71) Demandeur: Alstom, 75116 Paris (FR)
(72) Inventeur: Shahbaz, Zal, 50127 Firenze (IT); DeMars, Gérard, 69570 Dardilly (FR)
(74) Mandataire: Gosse, Michel

(57) **Abrégé**

Ce système comprend :
- un serveur Internet (7), consultable par des usagers du réseau de transport,
- au moins un centre (3) de contrôle du trafic sur ledit réseau de transport, ce centre de contrôle (3) étant connecté à des sources (1) de données sur l'état dudit trafic et comprenant des moyens (2) de traitement automatique des données en provenance de ces sources (1) en vue de fournir des informations directement exploitables par des contrôleurs du trafic, et
- des moyens de connexion (4, 8 ; 9, 10) pour transmettre, en temps réel, au moins une partie des informations directement exploitables au serveur Internet (7).

## Description

La présente invention concerne un système pour fournir via Internet des informations relatives à un réseau de transport collectif tel qu'un réseau ferroviaire.

Il est connu d'informer les usagers d'un tel réseau de transport collectif au moyen d'un serveur Internet contenant des informations, telles que des tarifs ou des horaires, régulièrement mises à jour, par exemple manuellement.

Par contre, des informations relatives au trafic sur le réseau de transport à un instant donné, telles que par exemple des annonces de retard, ne sont fournies que dans les gares, soit visuellement par affichage sur des tableaux, soit par renseignement téléphonique, mais le plus souvent de façon peu précise et peu rapide. Or, de telles informations ne sont pertinentes que si elles sont renouvelées sensiblement en temps réel, ce qui suppose que l'ensemble du processus permettant leur renouvellement soit automatisé.

Dans la plupart des cas, le réseau de transport collectif est doté d'un centre de contrôle du trafic, où opèrent des contrôleurs ayant en charge de surveiller et de réguler le trafic sur ce réseau de transport. Dans ce centre de contrôle du trafic, des données en provenance notamment du réseau de transport sont recueillies et traitées en vue de fournir des informations directement exploitables par les contrôleurs.

L'invention a donc pour but de proposer un système qui soit apte à fournir via Internet des informations relatives à l'état du trafic sur un réseau de transport collectif et dont le coût soit le plus faible possible.

A cet effet, l'invention a pour objet un système pour fournir via Internet des informations relatives à un réseau de transport collectif, ce système comprenant un serveur Internet, accessible à des usagers du réseau de transport, caractérisé en ce qu'il comporte :
- au moins un centre de contrôle du trafic sur ledit réseau de transport, ce centre de contrôle étant connecté à des sources de données sur l'état dudit trafic et comprenant des moyens de traitement automatique des données en provenance de ces sources en vue de fournir des informations directement exploitables par des contrôleurs du trafic, et
- des moyens de connexion pour transmettre, en temps réel, au moins une partie des informations directement exploitables au serveur Internet.

Selon d'autres caractéristiques avantageuses de ce système :
- les informations directement exploitables parviennent au serveur Internet sous forme d'images numérisées ;
- les moyens de connexion comprennent au moins un premier écran de visualisation des informations directement exploitables et au moins une caméra dirigée pour filmer l'image sur ce premier écran de visualisation et prévue pour générer les images numérisées ;
- lesdits moyens de connexion comprennent au moins une liaison pour l'acheminement de données numériques ;
- il comporte au moins un ordinateur destiné à être connecté via Internet audit serveur Internet, ainsi qu'au moins un deuxième écran de visualisation connecté à l'ordinateur, prévu pour afficher une partie des informations directement exploitables et placé dans une station du réseau de transport collectif, de manière à pouvoir être visualisé par des usagers de ce réseau de transport ;
- dans un véhicule ou une rame du réseau de transport collectif, il comporte au moins un autre ordinateur destiné à être connecté via Internet audit serveur Internet, des moyens pour la connexion par voie hertzienne de cet autre ordinateur audit serveur Internet, ainsi qu'au moins un troisième écran de visualisation connecté audit autre ordinateur, prévu pour afficher une partie dès informations directement exploitables et placé de manière à pouvoir être visualisé par des usagers présents dans le véhicule ou la rame ;
- il comporte des moyens de dialogue, associés à l'un au moins des deuxième et troisième écrans de visualisation et prévus pour permettre à un usager de dialoguer avec celui de l'un et l'autre ordinateurs qui est connecté à l'écran consulté par cet usager ;
- le réseau de transport collectif est un réseau ferroviaire.

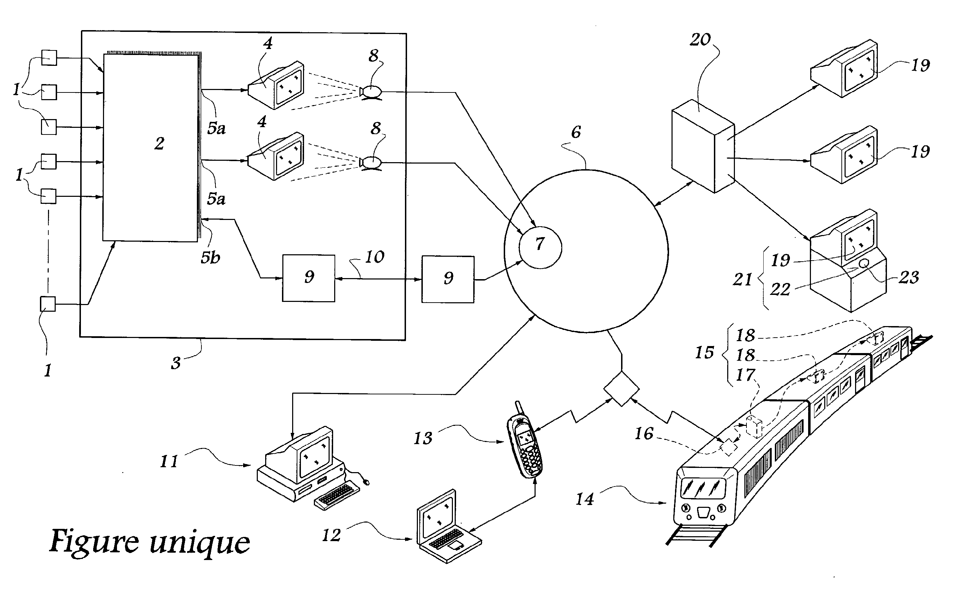

L'invention sera bien comprise à la lecture de la description qui va suivre, donnée uniquement à titre d'exemple et faite en se référant à la figure unique annexée.

Cette dernière est un schéma d'un système conforme à l'invention et prévu pour fournir via Internet des informations relatives à l'état du trafic sur un réseau de transport ferroviaire (non représenté).

Dans ce système, de multiples sources 1 de données sont raccordées à des moyens 2 de traitement automatiques de ces données. Ces dernières concernent pour la plupart l'état du trafic sur le réseau de transport ferroviaire. Par exemple, elles peuvent indiquer un retard, un accident ou une panne.

Les moyens de traitement automatiques 2 sont connus en soi, tout comme les sources 1, et font partie de l'équipement d'un centre 3 de contrôle du trafic sur le réseau de transport ferroviaire. Ils sont prévus pour recueillir les données en provenance des sources 1 et pour traiter celles-ci automatiquement afin de fournir des informations directement exploitables par des contrôleurs ayant en charge la surveillance et la régulation du trafic sur le réseau de transport ferroviaire. Ces contrôleurs prennent connaissance de ces informations grâce à des écrans de visualisation 4, chacun connecté à l'une de plusieurs sorties 5a prévues sur les moyens de traitement automatique 2.

Parmi les informations directement exploitables générées par les moyens de traitement automatique 2, certaines se présentent sous la forme de fichiers image, contenant des images numérisées à la disposition des contrôleurs.

La référence générale 6 désigne un réseau du type Internet, auquel est connecté un serveur Internet 7, accessible par exemple à des usagers du réseau de transport ferroviaire. Des caméras électroniques 8, chacune dirigée pour filmer tout ou partie d'un écran de visualisation 4, sont reliées au serveur Internet 7 qu'elles sont ainsi en mesure d'alimenter en temps réel avec des informations initialement destinées aux contrôleurs.

Un écran de visualisation 4 et une caméra 8 forment donc des moyens de connexion, lesquels peuvent être tous semblables. Toutefois, dans l'exemple illustré, d'autres moyens de connexion relient les moyens de traitement automatique 2 au serveur Internet 7. Il s'agit de deux interfaces réseaux 9 reliés entre eux par une double liaison 10 pour l'acheminement de données numériques dans les deux sens. Ces interfaces réseaux 9 sont connectés l'un au serveur Internet 7 et l'autre à une entrée/sortie 5b destinée à recevoir des requêtes en provenance de ce serveur 7 et à délivrer les informations directement exploitables sous forme d'images numérisées. Comme les moyens de connexion formés par un écran de visualisation 4 et une caméra 8, la double liaison 10 et les interfaces réseaux 9 assurent la transmission, au serveur Internet 7, d'informations initialement destinées aux contrôleurs, et ce directement et en temps réel, ces informations étant contenus dans des signaux dont chacun permet de reconstruire une image.

Avantageusement, le serveur 7 compose, à partir des images numérisées en provenance des moyens de traitement automatique 2 et des caméras électroniques 8, de nouvelles images numérisées, offertes à la consultation. Par exemple, il sélectionne, découpe et dispose, à l'intérieur d'une composition prédéfinie, des parties des images numérisées en provenance des moyens de traitement automatique 2 et des caméras électroniques 8.

Bien entendu, le serveur Internet 7 peut également contenir des informations telles que des horaires, des correspondances et/ou des tarifs, qui ont un caractère plus général et moins ponctuel que les informations initialement destinées aux contrôleurs, et sont régulièrement mises à jour.

Un usager peut accéder à l'ensemble de ces informations au moyen d'un ordinateur 11, par exemple personnel, relié au réseau 6 du type Internet. Aux mêmes fins, il peut employer un ordinateur portable 12, qui, grâce à un téléphone cellulaire 13, est également relié au réseau 6 du type Internet.

Bien que dans l'exemple illustré, l'ordinateur portable 12 et le téléphone cellulaire 13 soient deux dispositifs distincts connectés entre eux, il va de soi que l'un peut être intégré à l'autre, de manière à ne former physiquement qu'un seul objet.

Si l'usager considéré est en train de voyager, l'ordinateur portable 12 et le téléphone cellulaire 13 lui permettent de consulter le serveur Internet 7 et ainsi de se renseigner, en temps réel, par exemple sur la situation du train dans lequel il se trouve, sur celle de la ligne que son train empreinte et/ou sur la situation en ce qui concerne ses éventuelles correspondances.

Pour qu'au cours de leur voyage, tous les usagers à bord d'un train 14 aient accès à ces informations ou à d'autres semblables, même s'ils ne sont pas munis d'un ordinateur portable 12 et d'un téléphone cellulaire 13, ce train 14 est pourvu d'un réseau interne 15 et de moyens 16 pour connecter, par exemple au moyen d'une liaison hertzienne utilisant la technologie de la téléphonie mobile, ce réseau interne 15 au réseau 6 du type Internet. Le réseau interne 15 comprend un ordinateur central 17, qui est destiné à communiquer avec le serveur Internet 7 et auquel sont reliés des écrans de visualisation 18 placés dans les voitures des usagers, de manière à pouvoir être consultés par ceux-ci.

Les usagers se trouvant dans une gare ont également accès, en temps réel, au moins à certaines des informations disponibles sur le serveur Internet 7. A cet effet, des écrans de visualisation 19 sont placés en différents endroits de la gare considérée, par exemple dans les halls et sur les quais. Ces écrans 19 sont commandés par un ordinateur central 20, qui est relié au réseau 6 du type Internet.

Dans l'exemple représenté, une borne interactive 21 est formée en associant l'un des écrans 19 à des moyens de dialogue 22, qui sont munis d'une boule 23 libre en rotation et de capteurs associés à cette boule 23, et sont prévus pour permettre à un usager de dialoguer avec l'ordinateur 20 en faisant tourner la boule 23. En variante, l'écran 19 peut être un écran tactile.

Il va de soi que des moyens de dialogue 22 peuvent également être associés à l'un au moins des écrans embarqués 18.

Conformément au but que l'invention entend atteindre, le système qui vient d'être décrit est, du fait de sa simplicité, peu coûteux, notamment en comparaison de la solution alternative qui consisterait à développer des programmes destinés à effectuer une sélection parmi les informations générées par les moyens de traitement automatique 2 et à présenter cette sélection sous une forme telle que sa consultation soit aisée et agréable.

En outre, toujours grâce à sa simplicité, ce système peut être rapidement installé, ce qui est avantageux.

Il met à profit le fait que les moyens de traitement automatique 2 fournissent des informations directement exploitables, en transmettant directement une partie de celles-ci. Comme cette transmission est directe, elle se fait en temps réel, ce qui constitue un avantage supplémentaire. L'utilisation du réseau 6 du type Internet permet de mettre aisément ces informations à disposition d'un grand nombre d'usagers.

## Revendications

1. Système pour fournir via Internet (6) des informations relatives à un réseau de transport collectif, ce système comprenant un serveur Internet (7), accessible à des usagers du réseau de transport, **caractérisé en ce qu'**il comporte :
- au moins un centre (3) de contrôle du trafic sur ledit réseau de transport, ce centre de contrôle (3) étant connecté à des sources (1) de données sur l'état dudit trafic et comprenant des moyens (2) de traitement automatique des données en provenance de ces sources (1) en vue de fournir des informations directement exploitables par des contrôleurs du trafic, et
- des moyens de connexion (4, 8 ; 9, 10) pour transmettre, en temps réel, au moins une partie des informations directement exploitables au serveur Internet (7).

2. Système selon la revendication 1, **caractérisé en ce que** les informations directement exploitables parviennent au serveur Internet (7) sous forme d'images numérisées.

3. Système selon la revendication 2, **caractérisé en ce que** les moyens de connexion comprennent au moins un premier écran (4) de visualisation des informations directement exploitables et au moins une caméra (8) dirigée pour filmer l'image sur ce premier écran de visualisation (4) et prévue pour générer les images numérisées.

4. Système selon l'une quelconque des revendications précédentes, **caractérisé en ce que** lesdits moyens de connexion comprennent au moins une liaison (10) pour l'acheminement de données numériques.

5. Système selon l'une quelconque des revendications précédentes, **caractérisé en ce qu'**il comporte au moins un ordinateur (20) destiné à être connecté via Internet (6) audit serveur Internet (7), ainsi qu'au moins un deuxième écran de visualisation (19) connecté à l'ordinateur (20), prévu pour afficher une partie des informations directement exploitables et placé dans une station du réseau de transport collectif, de manière à pouvoir être visualisé par des usagers de ce réseau de transport.

6. Système selon l'une quelconque des revendications précédentes, **caractérisé en ce que** dans un véhicule ou une rame du réseau de transport collectif, il comporte au moins un autre ordinateur (17) destiné à être connecté via Internet (6) audit serveur Internet (7), des moyens (16) pour la connexion par voie hertzienne de cet autre ordinateur (17) audit serveur Internet (7), ainsi qu'au moins un troisième écran de visualisation (18) connecté audit autre ordinateur (17), prévu pour afficher une partie des informations directement exploitables et placé de manière à pouvoir être visualisé par des usagers présents dans le véhicule ou la rame.

7. Système selon la revendication 5 ou 6, **caractérisé en ce qu'**il comporte des moyens de dialogue (22), associés à l'un au moins des deuxième (19) et troisième (18) écrans de visualisation et prévus pour permettre à un usager de dialoguer avec celui de l'un (20) et l'autre (17) ordinateurs qui est connecté à l'écran consulté par cet usager.

8. Système selon l'une quelconque des revendications précédentes, **caractérisé en ce que** le réseau de transport collectif est un réseau ferroviaire.
